Europäisches Patentamt

European Patent Office

Office européen des brevets

(19)

(11) EP 0 914 936 A2

(12) **EUROPEAN PATENT APPLICATION**

(43) Date of publication:
   **12.05.1999 Bulletin 1999/19**

(51) Int Cl.[6]: **B29C 67/00**, C08J 5/24,
   C08G 59/68, C08L 63/00

(21) Application number: **98811097.9**

(22) Date of filing: **03.11.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Kultzow, Robert John**<br>  **Okemos, MI 48864 (US)**<br>• **Pilato, Luciano**<br>  **Haslett, MI 48840 (US)**<br>• **Ferng, William Bin**<br>  **Novi, MI 48374 (US)** |
| (30) Priority: **12.11.1997 US 65384 P** | |
| (71) Applicant: **Ciba Specialty Chemicals Holding Inc.**<br>**4057 Basel (CH)** | |

(54) **Cationic catalysts for epoxy resin formulations in pultrusion molding systems**

(57)    The present invention relates to a pultrusion molding system comprising a) a pultrusion die and b) a feeding means for introducing a moldable composite material into the pultrusion die. The moldable composite material has been impregnated with a heat-curable resin formulation containing a cationic curing agent for epoxy resins. The cationic curing agent is an aromatic sulfonium salt. The present invention also relates to a process for making a composite article comprising a) feeding a moldable composite material through a pultrusion die, wherein the moldable composite material has been impregnated with a heat-curable resin formulation containing a cationic curing agent for epoxy resins. The heat curable resin formulation is preferably a mixture of at least one multifunctional epoxy resin and a cationic curing catalyst for the epoxy resin.

EP 0 914 936 A2

Printed by Jouve, 75001 PARIS (FR)

## Description

The present invention relates to pultrusion molding systems comprising using a moldable composite material that has been impregnated with a heat-curable resin formulation containing a cationic curing agent for epoxy resins. The present invention further relates to a process for producing a composite article by feeding a moldable composite material through a pultrusion die, wherein the moldable composite material has been impregnated with a heat-curable resin formulation containing a cationic curing agent for epoxy resins.

Background of the Invention

Pultrusion systems are a well-known method for producing continuous lengths of fiber-reinforced or composite articles. Most composite articles resulting from pultrusion systems are produced from glass fiber reinforced materials in a thermosetting matrix material. Many other fibers, such as carbon fibers, polyacrylonitrile and polyamides, can be used in pultrusion systems. The resulting composite articles have excellent strength to weight characteristics.

Polyester resin formulations are most commonly used in pultrusion systems as the matrix material. Polyesters cure, typically with peroxides, very rapidly with a high post gellation shrinkage. The cure and shrinkage characteristics of polyester resins allow for facile processing for pultrusion. Shrinkage after gellation reduces frictional forces in the pultrusion die, and therefore, reduces required pull loads.

Epoxy resin formulations have been employed in pultrusion systems. For instance, U.S. Pat. No. 4,754,015, assigned to Lockheed Corporation, discloses an epoxy resin system that is adapted for use in pultrusion systems. The epoxy resin system shown therein contains a specific epoxy resin and a combination of selected crosslinking or curing agents. The preferred epoxy resins are tris(hydroxyphenyl)methane-based epoxy resins. The selected crosslinking agents are (methyl)-bicyclo(2,2,1)heptane-2,3-dicarboxylic anhydride and polysebacic polyanhydride.

The Shell Development Company published two articles relating to the use of epoxy resin systems for pultrusion molding. An article entitled "New Epoxy Resin Systems for Pultrusion" by J.A. Kershaw discusses the use of bisphenol-A/epichlorohydrin epoxy resins that are cured with particulate anhydride or a liquid heterocyclic amine. An article entitled "Pultruding Epoxy Resin" by G.A. Hunter discloses the use of an epoxy resin and an amine type curing agent with added accelerator.

The cure and shrinkage characteristics of conventional anhydride or amine-cured epoxy resin systems are not conducive to pultrusion molding. Most epoxy cure reactions are slower than polyester cure reactions. Additionally, the degree of post-gellation shrinkage is significantly less than in a polyester formulation. In order to compensate for these shortcomings, one must process epoxy resin systems at higher die temperatures, in the range of 375°F to 400°F. The processing speeds must also be reduced to allow sufficient time for the epoxy-based formulations to cure. Reduced levels of shrinkage leads to sloughing. Sloughing is evidenced by an abrading and peeling-off of the surface layers adjacent to the die wall as the molded article exits the die. Processing at higher die temperatures results in higher thermal gradients within the molded article, which induces a higher internal stress distribution. In large profile pieces, the high internal stress distribution can lead to both internal and surface cracking.

Cationic curing systems for epoxy resins are well-known. A patent, U.S. Pat. No. 4,252,592, assigned to Ciba-Geigy Corporation, shows photopolymerizable compositions for making resin-impregnated composite articles. The compositions contain an epoxy resin, a heat-activated curing agent for the epoxy resin, and photopolymerization catalysts, especially aromatic diazonium salts that liberate a Lewis acid upon exposure to actinic radiation. A patent, U.S. Pat. No. 4,299,938, assigned to Ciba-Geigy Corporation, shows a photopolymerizable composition containing an epoxy resin, an aryloxysulfonium salt, optionally co-cured with a polyhydric alcohol, and optionally, a sensitizer. The compositions can be used as surface coatings, adhesives, for the production of fiber-reinforced composites, and putties or fillers. A patent, U.S. Pat. No. 4,339,567 shows photopolymerizable compositions containing an epoxy resin, a sulphoxonium salt, optionally co-cured with a polyhydric alcohol, and optionally, a sensitizer. The compositions can be used as surface coating, adhesives, for the production of fiber-reinforced composites, and putties or fillers.

A patent, U.S. Pat. No. 4,383,025, assigned to Ciba-Geigy Corporation, shows photopolymerizable compositions that contain an epoxy resin, arylcarbamoyl or aroylcarbamoyl sulphoxonium salts, optionally co-cured with a polyhydric alcohol, and optionally, a sensitizer. The compositions can be used as surface coatings, adhesives, production of fiber-reinforced composites, and putties or fillers. A patent, U.S. Pat. No. 4,398,014, assigned to Ciba-Geigy Corporation, shows photopolymerizable compositions containing an epoxy resin, an aromatic sulphonylsulphoxonium salt, optionally co-cured with a polyhydric alcohol, and optionally a sensitizer. The compositions can be used as surface coatings, adhesives, for production of fiber-reinforced composites, putties or fillers and for dip coating. An article entitled 'Cationic Epoxy Molded Electronic (Cemtronic) Technology and its Applications" discusses the use of aromatic sulfonium fluoro antimonate salts in epoxy resin compositions for encapsulating electronics. There is no suggestion in the prior art that the epoxy resin compositions including a cationic catalyst, particularly a sulfonium salt, would be suitable for use in pultrusion systems.

The present invention overcomes the problems associated with the use of epoxy resin formulations in pultrusion systems while retaining the superior strength and thermomechanical properties of a molded epoxy article relative to a polyester molded article.

Summary of the Invention

The present invention relates to a pultrusion molding system comprising a) a pultrusion die and b) a feeding means for introducing a moldable composite material into the pultrusion die. The moldable composite material has been impregnated with a heat-curable resin formulation containing a cationic curing agent for epoxy resins. The cationic curing agent is an aromatic sulfonium salt having the following chemical structure:

$$\left[ \begin{array}{c} R_1 \\ \backslash \\ S \\ / \\ R_2 \end{array} \begin{array}{c} O \\ \parallel \\ \\ R_3 \end{array} \right]^{+} \quad MX_n^{-}$$

wherein $R_1$, $R_2$, and $R_3$, independently of one another, are aryl groups; M denotes an atom of a metal or metalloid; X denotes a halogen atom and n is 4, 5 or 6. M is preferably an atom of boron, phosphorous, arsenic, antimony, or bismuth. More preferably, the aromatic sulfonium salt is a triaryl sulfonium salt of antimony hexafluoride, most preferably, dibenzylphenyl-sulfonium hexafluoroantimonate.

The present invention further relates to a pultrusion molding system comprising a) a pultrusion die and b) a feeding means for introducing a moldable composite material into the pultrusion die, wherein the moldable composite material has been impregnated with a heat-curable resin formulation comprising a mixture of at least one multifunctional epoxy resin and a cationic curing catalyst for the epoxy resin. The multifunctional epoxy resin is preferably an unmodified liquid epoxy resin based on bisphenol-A and epichlorohydrin. The cationic curing agent is an aromatic sulfonium salt having the following chemical structure:

$$\left[ \begin{array}{c} R_1 \\ \backslash \\ S \\ / \\ R_2 \end{array} \begin{array}{c} O \\ \parallel \\ \\ R_3 \end{array} \right]^{+} \quad MX_n^{-}$$

wherein $R_1$, $R_2$, and $R_3$, independently of one another, are aryl groups; M denotes an atom of a metal or metalloid; X denotes a halogen atom and n is 4, 5 or 6. M is preferably an atom of boron, phosphorous, arsenic, antimony, or bismuth. More preferably, the aromatic sulfonium salt is a triaryl sulfonium salt of antimony hexafluoride, most preferably, the cationic curing agent for epoxy resins is dibenzylphenyl-sulfonium hexafluoroantimonate.

The present invention also relates to a process for making a composite article comprising a) feeding a moldable composite material through a pultrusion die, wherein the moldable composite material has been impregnated with a heat-curable resin formulation containing a cationic curing agent for epoxy resins.

The present invention also relates to a process for making a composite article comprising a) feeding a moldable composite material through a pultrusion die, wherein the moldable composite material has been impregnated with a heat-curable resin formulation comprising a mixture of at least one multifunctional epoxy resin and a cationic curing catalyst for the epoxy resin.

Detailed Description of the Invention

The present invention is directed to the use of cationic catalysts, particularly aromatic sulfonium salts, to cure epoxy resin systems to produce homopolymerized polymeric matrices. The present invention is particularly useful in the pultrusion process for fabricating reinforced composite articles. Such pultruded articles can be used for a wide range of applications in which the fundamental design requirement of the product is that the cross-sectional profile is constant over its length. The selected cationic catalysts offer extended stability at room temperature with nearly instant reactivity with epoxides at temperatures greater than 70°C. The cured composite articles are characterized by having excellent mechanical and electrical properties that are superior to polyester-based systems, have a good working life and very rapid cure at pultrusion processing temperatures. Processing temperatures can be significantly lower than that typically used in pultrusion of other thermosetting materials, including polyester-based systems. The resulting epoxy systems exhibit a high degree of chemical shrinkage during cure, which is an essential feature for polymer materials used in a pultrusion process.

A pultrusion system usually includes: a) a creel; b) mat stands; c) resin impregnation tanks; d) forming guide(s); e) a pultrusion die (heated); f) a puller; and g) a cutting saw. The creel provides a continuous feed of reinforcing material, such as carbon fiber and fiberglass. Mat stands provide a matting material that is paired with the continuous feed of reinforcing material. The reinforcing material and matting material are then impregnated with a matrix material in the resin impregnation tanks to produce a moldable composite material. The resin impregnated moldable composite material then enters forming guides, which consolidate or form the materials into a mold configuration. The heated pultrusion die causes the resin impregnated composite material to harden into a final desired configuration. The resulting pultruded materials are transferred by the puller to a cutting saw, which produces composite articles of desired length.

The matrix material useful in the present invention is an epoxy resin-based formulation that includes a cationic catalyst to cure the epoxy resin. A cationic catalyst activates the epoxide groups via an active hydrogen to produce a new chemical bond and a hydroxyl group. Cationic catalysts produce homopolymerized resin matrix systems. A number of cationic catalysts, such as diazonium, iodonium, sulfonium and ferrocenium salts, have been developed or described in the literature. Cationic curing catalysts having low activation energies (less than about 110 kJ/mole) are particularly preferred for use in pultrusion systems herein. The most preferred cationic curing catalysts in the present invention are triaryl sulfonium salts.

Triaryl sulfonium salts can be characterized by the following chemical structure

$$\left[ \begin{array}{c} R_1 \\ \diagdown S \diagup \stackrel{O}{\diagup} \\ R_2 \quad R_3 \end{array} \right]^{+} \quad MX_n^{-}$$

wherein $R_1$, $R_2$, and $R_3$, independently of one another, are aryl groups; M denotes an atom of a metal or metalloid; X denotes a halogen atom and n is 4, 5 or 6. M preferably denotes an atom of boron, phosphorous, arsenic, antimony, or bismuth, especially, antimony. The anion $MX_n^{-}$ is preferably hexachlorobismuthate, hexafluoroantimonate, hexafluoroarsenate, hexafluorophosphate, or tetrafluoroborate. More preferably, the triaryl sulfonium salt is a triaryl sulfonium salt of antimony hexafluoride, most preferably dibenzylphenyl-sulfonium hexafluorantimonate. A particularly preferred triaryl sulfonium salt is commercially available from Ciba Specialty Chemicals Corporation, Tarrytown, NY under the tradename ZKRT 1507.

The particularly preferred cationic catalysts are high melting solids. In order to produce a uniformly cured epoxy resin, the cationic catalysts are dissolved in a liquid carrier, preferably a blend of dibutyl phthalate and a carboxylic acid anhydride. The concentration of cationic catalyst in the liquid carrier is about 10% by weight.

The cationic catalyst described above can be used in conjunction with a broad array of epoxy resins, to include, diglycidyl ethers of bisphenol A, diglycidyl ethers of bisphenol F, epoxy phenol novolacs, epoxy cresol novolacs, diglycidyl esters of hexhydrophthalic acid, diglycidyl esters of tetrahydrophthalic acid, 3,4-epoxycyclohexylmethyl-3,4-epoxycyclohexane carboxylate, triglycidyl ether of para-aminophenol resins, and N,N,N',N'-tetraglycidyl-4,4'-methylenebisbenzeneamine resins. Particular preference is given for diglycidyl ethers of bisphenol A, diglycidyl ethers of bisphenol F, epoxy phenol novolacs, epoxy cresol novolacs, diglycidyl esters of hexhydrophthalic acid, diglycidyl esters of tetrahydrophthalic acid, 3,4-epoxycyclohexylmethyl-3,4-epoxycyclohexane carboxylate. Said resins are commercially available from, among others, Ciba Specialty Chemicals Corporation, Tarrytown, NY.

The matrix material described above can further include various epoxy diluents to reduce viscosity, agents for air release, internal mold release additives and inorganic fillers, such as kaolin, hydrated alumina, silica and wollastonite.

Before use in a pultrusion system, the resin component and hardener component, which consists of the cationic catalyst in the liquid carrier, are preferably separately stored at room temperature. The resin component and hardener component are readily combined as a simple blend having approximately 2-10 parts, preferably 2-5 parts, more preferably about 3 parts of hardener component per 100 parts of resin component. The resulting formulation preferably has a viscosity of 2500 centipoise at 23°C. The time in which the viscosity doubles for the resulting formulation is defined as the working life of the blend. The formulation preferably has a working life of at least 15 hours at 23°C.

A formulation, such as the formulation described above, can be used to impregnate a composite material of a reinforcing material and matting material. A resin impregnated moldable composite article preferably enters the forming guides and pultrusion die at a rate of about 12 inches/minute. The pultrusion die is heated to a temperature in the range of about 80°C to 150°C, more preferably about 100°C. A resulting molded composite article is then commonly subjected to finishing operations and cut to a desired length.

The present invention will be further described with reference to the following non-limiting examples.

Example 1 -

600 grams of an epoxy resin component is prepared at room ambient temperature by blending: 81 parts by weight of Araldite® GY 6010, which is an unmodified liquid epoxy resin based on bisphenol-A and epichlorohydrin, available from Ciba Specialty Chemicals Corporation, 11.2 parts by weight of an epoxy diluent Araldite® DY 026 SP, which is butane diol diglycidyl ether, available from Ciba Specialty Chemicals Corporation, 0.3 parts by weight of a non-silicone air release agent, 0.5 parts by weight of an internal release agent and 7 parts by weight of kaolin clay. The resulting resin component is a free-flowing liquid.

50 grams of a cationic hardener component is prepared at room temperature by dissolving 9.4 parts by weight of sulfonium salt ZKRT 1507, a dibenzylphenyl-sulfonium hexafluoroantimonate, available from Ciba Specialty Chemicals Corporation in a liquid carrier. The liquid carrier comprises a blend of 74.6 parts by weight of dibutyl phthalate and 16 parts by weight carboxylic acid anhydride ECA 100 LC, available from Dixie Chemicals of Houston, Texas. The sulfonium salt readily dissolves in the liquid carrier in a glass beaker when agitated with a magnetic stirrer.

A resin formulation for use in a pultrusion system is prepared by blending 100 parts by weight of resin component with 3 parts by weight of hardener component.

Gel times for resin formulations prepared in the manner described above were measured using a Sunshine® gel timer at various temperatures. The results are shown immediately below in Table 1.

Table 1

| Temperature, °C | Gel Time, Seconds |
|---|---|
| 50 | 3500-4000 |
| 65 | 600-700 |
| 80 | 180-220 |
| 100 | 80-90 |
| 125 | 40-50 |
| 150 | 30-35 |

Volume shrinkage of the formulated pultrusion system is approximately 4%.

## Claims

1. A pultrusion molding system comprising

   a) a pultrusion die and
   b) a feeding means for introducing a moldable composite material into the pultrusion die,

   wherein the moldable composite material has been impregnated with a heat-curable resin formulation containing a cationic curing agent for epoxy resins.

2. A pultrusion molding system according to claim 1 wherein the cationic curing agent is an aromatic sulfonium salt.

3. A pultrusion molding system according to claim 2 wherein the aromatic sulfonium salt is a triaryl sulfonium salt having the following chemical structure:

wherein $R_1$, $R_2$, and $R_3$, independently of one another, are aryl groups; M denotes an atom of a metal or metalloid; X denotes a halogen atom and n is 4, 5 or 6.

4. A pultrusion molding system according to claim 3 wherein M is an atom of boron, phosphorous, arsenic, antimony, or bismuth.

5. A pultrusion molding system according to claim 3 wherein the aromatic sulfonium salt is a triaryl sulfonium salt of antimony hexafluoride.

6. A pultrusion molding system according to claim 1 wherein the cationic curing agent for epoxy resins is dibenzylphenyl-sulfonium hexafluoroantimonate.

7. A pultrusion molding system comprising

   a. a pultrusion die and
   b. a feeding means for introducing a moldable composite material into the pultrusion die,

   wherein the moldable composite material has been impregnated with a heat-curable resin formulation comprising a mixture of at least one multifunctional epoxy resin and a cationic curing catalyst for the epoxy resin.

8. A pultrusion molding system according to claim 8 wherein the at least one multifunctional epoxy resin is an unmodified liquid epoxy resin based on bisphenol-A and epichlorohydrin.

9. A pultrusion molding system according to claim 7 wherein the cationic curing agent is an aromatic sulfonium salt.

10. A pultrusion molding system according to claim 9 wherein the aromatic sulfonium salt is a triaryl sulfonium salt having the following chemical structure:

wherein $R_1$, $R_2$, and $R_3$, independently of one another, are aryl groups; M denotes an atom of a metal or metalloid; X denotes a halogen atom and n is 4, 5 or 6.

11. A pultrusion molding system according to claim 10 wherein M is an atom of boron, phosphorous, arsenic, antimony, or bismuth.

12. A pultrusion molding system according to claim 9 wherein the aromatic sulfonium salt is a triaryl sulfonium salt of antimony hexafluoride.

13. A pultrusion molding system according to claim 7 wherein the cationic curing agent for epoxy resins is dibenzylphenyl-sulfonium hexafluoroantimonate.

14. A process for making a composite article comprising

a) feeding a moldable composite material through a pultrusion die, wherein the moldable composite material has been impregnated with a heat-curable resin formulation containing a cationic curing agent for epoxy resins.

15. A process for making a composite article comprising

a) feeding a moldable composite material through a pultrusion die, wherein the moldable composite material has been impregnated with a heat-curable resin formulation comprising a mixture of at least one multifunctional epoxy resin and a cationic curing catalyst for the epoxy resin.